# EUROPÄISCHE PATENTANMELDUNG

(11) **EP 0 962 386 A1**
(43) Veröffentlichungstag der Anmeldung: **08.12.1999**
(21) Anmeldenummer: 99109575.3
(22) Anmeldetag: 14.05.1999
(51) Int. Cl.: B65B 9/04, B65B 47/00, B29C 51/20

(54) **Matrize und Verfahren zur Herstellung einer Verpackungsmulde mit Hinterschnitt**

(30) Priorität: 02.06.1998 DE 19824588
(71) Anmelder: Tiromat Krämer + Grebe GmbH & Co. KG, 35216 Biedenkopf-Wallau (DE)
(72) Erfinder: Thomas, Ulrich, 35236 Breidenbach-Oberdieten (DE); Blöcher, Rolf, 35236 Breidenbach (DE); Inverardi, Celestino, 25030 Corzano (Bs) (IT)
(74) Vertreter: Kutzenberger, Helga, Dr.

(57) **Zusammenfassung**

Die vorliegende Erfindung betrifft eine Matrize zur Herstellung einer Verpackungsmulde (1) mit mindestens einem Hinterschnitt (5), die aus einem Unterteil (7), zwei Seitenteilen (8,9), die quer und zwei Seitenteilen (10,11), die parallel zur Transportrichtung der Verpackungsmulden ausgerichtet sind, besteht, bei der mindestens eines der parallel zur Transportrichtung ausgerichteten Seitenteile (11) als Form für den Hinterschnitt dient und bei der dieses Seitenteil (11) in seiner räumlichen Lage gegenüber dem Maschinenrahmen fixiert ist, während die anderen Teile (7,8,9,10) der Matrize vertikal absenkbar sind.

## Beschreibung

Die vorliegende Erfindung betrifft eine Matrize und ein Verfahren zur Herstellung einer Verpackungsmulde mit mindestens einem Hinterschnitt.

Verpackungen, insbesondere für Lebensmittel, spielen in der heutigen Zeit eine immer größere Rolle. Die Lebensmittel werden dabei in eine sogenannte Verpackungsmulde gelegt und die Verpackungsmulde wird dann mit einer Deckelfolie verschlossen.

Die Verpackungsmulden werden in der Regel semikontinuierlich in sogenannten Tiefziehstationen von Verpackungsmaschinen produziert. Dafür wird eine Folie, aus der die Verpackungsmulde hergestellt wird, über eine Matrize der Tiefziehstation transportiert, dort fixiert, gegebenenfalls erwärmt und dann z. B. mit Druck in die Matrize tiefgezogen. Die Matrize wird danach abgesenkt und dabei die fertiggestellte Verpackungsmulde aus der Matrize entformt. Sobald die Matrize soweit abgesenkt ist, daß sie sich unterhalb der gerade gefertigten Verpackungsmulde befindet, wird diese um die Länge einer Verpackungsmulde weitertransportiert. Danach wird die Matrize wieder angehoben und die nächste Verpackungsmulde tiefgezogen.

Für die Verpackungsindustrie sind sogenannte Stand-up Packungen von ganz besonderem Interesse, weil diese nicht im Regal liegen sondern stehen und damit eine große Präsentationsfläche bieten. Stand-up Verpackungen liegen nicht auf der Unterseite der Verpackungsmulde, sondern stehen auf einem schmalen Seitenteil der Verpackungsmulde; d.h. bei dieser Verpackung ist die Deckelfolie ungefähr senkrecht zu der Auflage, auf der die Verpackung steht. Bei diesen Verpackungen muß die Verpackungsmulde neben der Schnittkante eine zweite Stellfläche aufweisen, auf denen die Stand-up Verpackung stabil steht. Diese Stellfläche kann z.B. durch einen Hinterschnitt realisiert werden, dessen tiefste Stelle mit der Schnittkante ungefähr auf einer Ebene liegen muß, damit nicht nach hinten kippt, wenn sie auf der Seite steht.

Ein solcher Hinterschnitt bereitet jedoch Schwierigkeiten beim Entformen der Verpackungsmulde aus der Matrize nach dem Tiefziehen, weil der Hinterschnitt der Verpackungsmulde beim Absenken der Matrize gegen die Matrize gedrückt und dabei entweder eingedrückt oder sogar zerstört wird.

Es hat deshalb nicht an Versuchen gefehlt, Vorrichtungen zum Herstellen von Verpackungsmulden mit einem Hinterschnitt zur Verfügung zu stellen, bei denen der Hinterschnitt beim Entformen nicht beschädigt wird. So lehrt die EP 0 538 570 beispielsweise, die Matrize beim Entformen nicht senkrecht nach unten sondern parallel zu der geneigten Seitenfläche des Hinterschnitts zu führen. Auf diese Weise können Verpackungsmulden mit Hinterschnitten quer zur Transportrichtung der Verpackungsmulden hergestellt werden. Diese Vorgehensweise hat den Nachteil, daß die Bewegung der Matrize beim Entformen nur mit einem relativ aufwendigen Antrieb realisiert werden kann. Darüber hinaus können mit dieser Vorrichtung nur Verpackungsmulden mit einem Hinterschnitt quer zur Transportrichtung der Verpackungsmulde hergestellt werden.

Es stellt sich deshalb die Aufgabe, eine Vorrichtung zur Verfügung zu stellen, mit der eine Verpackunsmulde mit mindestens einem Hinterschnitt hergestellt werden kann und die die Nachteile des Standes der Technik nicht aufweist.

Die Aufgabe wird erfindungsgemäß durch die Bereitstellung einer Matrize zur Herstellung einer Verpackungsmulde mit mindestens einem Hinterschnitt gelöst, die aus einem Unterteil, zwei Seitenteilen, die quer und zwei Seitenteilen, die parallel zur Transportrichtung der Verpackungsmulden ausgerichtet sind, besteht und bei der mindestens eines der parallel zur Transportrichtung ausgerichteten Seitenteile als Form für den Hinterschnitt dient und bei der dieses Seitenteil in seiner räumlichen Lage gegenüber dem Maschinenrahmen fixiert ist, während die anderen Teile der Matrize vertikal absenkbar sind.

Das Seitenteil, das als Form für den Hinterschnitt dient, verjüngt sich im wesentlichen vom oberen Ende der Matrize in Richtung zum Unterteil.

Vorzugsweise dienen beide parallel zur Transportrichtung ausgerichteten Seitenteile als Form für einen Hinterschnitt, so daß eine Verpackungsmulde mit zwei Hinterschnitten hergestellt werden kann. Diese Seitenteile sind dann beide in ihrer räumlichen Lage gegenüber dem Maschinenrahmen fixiert.

In einer anderen bevorzugten Ausführungsform sind die Seitenteile, die als Form für den Hinterschnitt dienen, durch einen oder mehrere Stege unterbrochen, die sich nicht nach unten verjüngen, so daß an diesen Stellen kein Hinterschnitt in der Verpackungsmulde erzeugt wird.

In einer weiteren bevorzugten Ausführungsform weisen die Seitenteile, die in ihrer Lage gegenüber dem Maschinenrahmen unverändert bleiben, an ihrer Oberseite eine Oberfläche mit einem geringen Reibkoeffizienten auf. Diese Oberfläche kann entweder poliert oder mit Teflon oder ähnlichem beschichtet sein.

Um die Folie mit Vakuum in die Matrize tiefziehen zu können, sind die Fugen zwischen den Seitenteilen mit denen die Hinterschnitte geformt werden und den anderen Teilen der Matrize, die an diese Seitenteile angrenzen, vorzugsweise abgedichtet.

Eine Matrize dient vorzugsweise zur Herstellung von mindestens zwei Verpackunsmulden. Eine solche Matrize weist neben dem Unterteil, den Seitenteilen, die quer und den Seitenteilen, die parallel zur Transportrichtung der Verpackungsmulden ausgerichtet sind, zusätzlich vorzugsweise mindestens ein Mittelteil auf, das sich vorzugsweise auf beiden Seiten vom oberen Ende der Matrize in Richtung zur Unterseite verjüngt und gegenüber dem Maschinenrahmen in seiner räumlichen Lage fixiert ist.

Auch die Seitenteile einer solchen Matrize sind bevorzugt so geformt, daß sie zur Herstellung von Hinterschnitten dienen können, die dann ebenfalls gegenüber dem Maschinenrahmen in seiner räumlichen Lage fixiert sind.

Die Mittelteile und gegebenenfalls die Seitenteile, die als Form für einen Hinterschnitt dienen, sind vorzugsweise durch Stege unterbrochen, die sich nicht nach unten verjüngen, so daß an diesen Stellen kein Hinterschnitt in der Verpackungsmulde erzeugt wird.

In einer weiteren bevorzugten Ausführungsform weisen die Mittelteile und die Seitenteile, die in ihrer Lage gegenüber dem Maschinenrahmen unverändert bleiben, an ihrer Oberseite eine Oberfläche mit einem geringen Reibkoeffizienten auf. Diese Oberfläche kann entweder poliert oder mit Teflon oder ähnlichem beschichtet sein.

Um die Folie mit Vakuum in die Matrize tiefziehen zu können, sind die Fugen zwischen den Mittelteilen und gegebenenfalls zwischen den Seitenteilen, mit denen Hinterschnitte geformt werden, und den anderen Teile der Matrize, die an diese Seitenteile bzw. Mittelteile angrenzen, vorzugsweise abgedichtet.

Eine weitere Aufgabe der vorliegenden Erfindung ist es, ein Verfahren zur Herstellung von Verpackungsmulden zur Verfügung zu stellen, das die Nachteile des Standes der Technik nicht aufweist.

Diese Aufgabe wird erfindungsgemäß durch die Bereitstellung eines Verfahrens zur Herstellung einer Verpackungsmulde mit mindestens einem Hinterschnitt unter Verwendung der erfindungsgemäßen Matrize gelöst, wobei
- die Folie, aus der die Verpackungsmulde hergestellt wird, über die Matrize transportiert, gegebenenfalls erwärmt und in die Matrize geformt wird,
- die vertikal verschiebbaren Teile der Matrize abgesenkt werden und
- die fertiggestellte Verpackungsmulde weitertransportiert wird.

Das Erwärmen der Folie kann auch vor der Tiefziehstation erfolgen.

In einer bevorzugten Ausführungsform wird die Folie mit einem Stempel in die Matrize gedrückt und damit vorgeformt und anschließend mit Luftdruck oberhalb der Folie und/oder mit Vakuum unterhalb der Folie fertiggeformt.

Ebenfalls bevorzugt wird die Folie nur mit Luftdruck oberhalb der Folie oder nur mit Vakuum unterhalb der Folie oder einer Kombination von Druck und Vakuum in die Matrize tiefgezogen.

Die vorliegende Erfindung hat den Vorteil, daß eine Verpackungsmulde mit einer oder mehreren parallel zur Transportrichtung der Verpackungsmulde ausgerichteten Hinterschnitten versehen werden kann. Durch Kombination der Merkmale der vorliegenden Erfindung mit den Merkmalen der Tiefziehstation gemäß der EP 0 538 570 ist es sogar möglich, die Verpackungsmulde mit einem zusätzlichen quer zur Transportrichtung der Verpackungsmulde ausgerichteten Hinterschnitt zu versehen. Die erfindungsgemäße Matrize ist kostengünstig herzustellen und das erfindungsgemäße Verfahren einfach durchzuführen.

Die Erfindung wird im folgenden anhand der **Figuren 1-6** erläutert. Diese Erläuterung ist lediglich beispielhaft und schränkt somit die Erfindung nicht ein.
Die **Figur 1** zeigt eine Stand-up Verpackung.
Die **Figuren 2a und 2b** zeigen eine erfindungsgemäße Matrize zur Herstellung von einer Verpackungsmulde.
Die **Figuren 3a und 3b** zeigen eine erfindungsgemäße Matrize zur Herstellung von zwei Verpackungsmulden.
**Figur 4** zeigt eine erfindungsgemäße Matrize zur Herstellung von zwei Verpackungsmulden, wobei das Mittelteil durch Stege unterbrochen ist.
**Figur 5** zeigt den Absenkmechanismus für die Matrize.
**Figur 6** zeigt eine Tiefziehstation mit der erfindungsgemäßen Matrize.

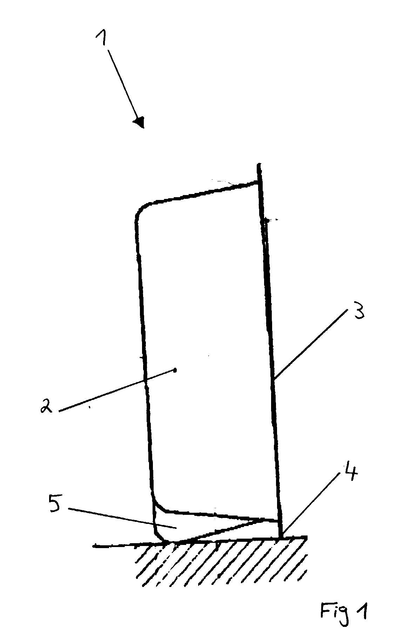

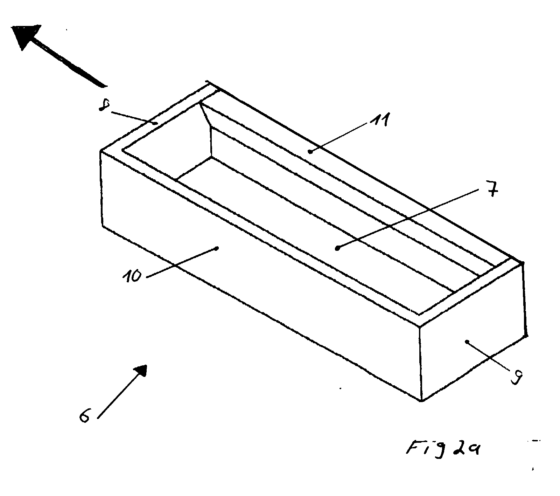

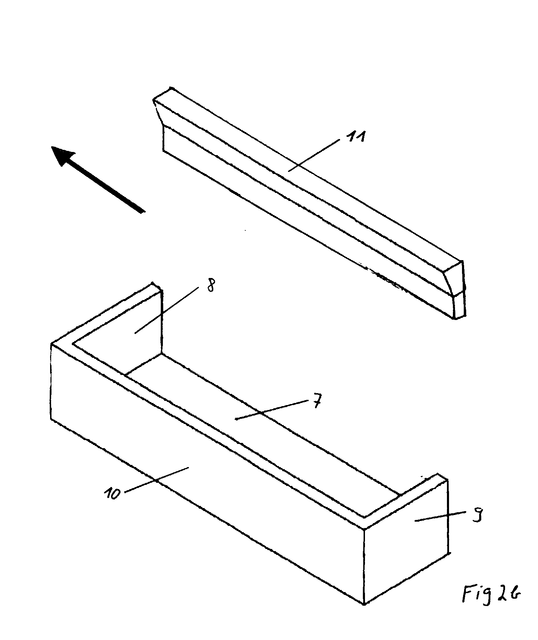

Die **Figur 1** zeigt eine sogenannte Stand-up Verpackung 1. Die Verpackung 1 besteht aus einer Verpackungsmulde 2 und einer Deckelfolie 3. Die Stand-up Verpackung steht auf ihrer Schnittkante 4 und weist einen Hinterschnitt 5 auf, um die Verpackung in ihrer Lage etwa senkrecht zu der Fläche, auf der sie steht, zu stabilisieren.

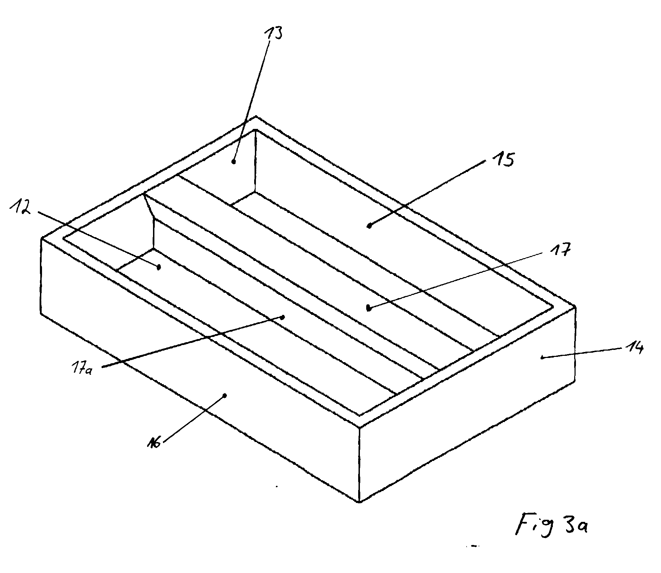

In **Figur 2a** ist die erfindungsgemäße Matrize 6 dargestellt. Die Matize dient als Form für die Herstellung der Verpackungsmulde mit einem Hinterschnitt. Die Matrize weist ein Unterteil 7, Seitenteile 8, 9, die quer und Seitenteile 10, 11, die parallel zur Transportrichtung der Verpackungsmulden ausgerichtet sind, auf. Der Pfeil zeigt die Transportrichtung der fertiggestellten Verpackungsmulden an. Das Seitenteil 11 ist am oberen Ende dicker als am unteren Ende, so daß es als Form für den Hinterschnitt in der Verpackungsmulde dient. Wenn eine Verpackungsmulde mit zwei Hinterschnitten hergestellt werden soll, so kann auch das Seitenteil 10 entsprechend dem Seitenteil 11 ausgebildet sein.

In **Figur 2b** ist die Matrize gemäß **Figur 2a** nach dem Absenken dargestellt. Nach dem Tiefziehen werden die Teile 7, 8, 9, 10 der Matize abgesenkt und dabei die entstandene Verpackungsmulde entformt, während das Seitenteil 11 nicht abgesenkt wird, sondern in seiner räumlichen Lage fixiert bleibt, damit der mit dem Seitenteil 11 geformte Hinterschnitt nicht beschädigt wird. Die so entstandene Verpackungsmulde kann dann in Richtung des dargestellten Pfeiles, parallel zum Seitenteil 11 weitertransportiert werden, ohne daß der Hinterschnitt Schaden nimmt.

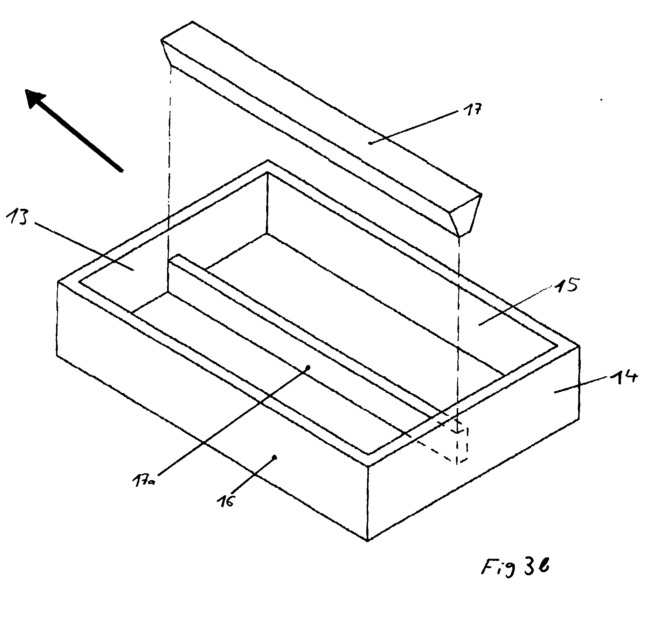

In **Figur 3a** ist eine erfindungsgemäße Matrize zur Herstellung von zwei Verpackungsmulden dargestellt. Neben der Unterseite 12, den Seitenteilen 13, 14, die quer und Seitenteile 15, 16, die parallel zur Transportrichtung der Verpackungsmulden ausgerichtet sind, weist diese Matrize die Mittelteile 17, 17a auf. Das Mittelteil 17 verjüngt sich auf beiden Seiten von oben nach unten, so daß es jeweils für beide Verpackungsmulden als Form für den Hinterschnitt dient. Das Mittelteil 17a weist einen konstanten Querschnitt auf. Der Fachmann erkennt sofort, daß die Mittelteile 17 und 17a auch als ein Teil gefertigt werden können. Selbstverständlich können auch die Seitenteile 15 und 16 so geformt sei, daß sie als Form für Hinterschnitte dienen können.

In **Figur 3b** ist die Matrize gemäß **Figur 3a** nach dem Absenken dargestellt. Nach dem Tiefziehen werden die Teile 12, 13, 14, 15, 16 und 17a der Matrize abgesenkt und dabei die entstandene Verpackungsmulde entformt, während das Seitenteil 17 nicht abgesenkt wird sondern in seiner räumlichen Lage fixiert bleibt, damit die mit den Mittelteilen 17 und 17a geformten Hinterschnitte nicht beschädigt werden. Die entstandenen Verpackungsmulden können dann in Richtung des dargestellten Pfeiles, parallel zum Mittelteil 17 weitertransportiert werden, ohne daß die Hinterschnitte der Verpackungsmulden Schaden nehmen.

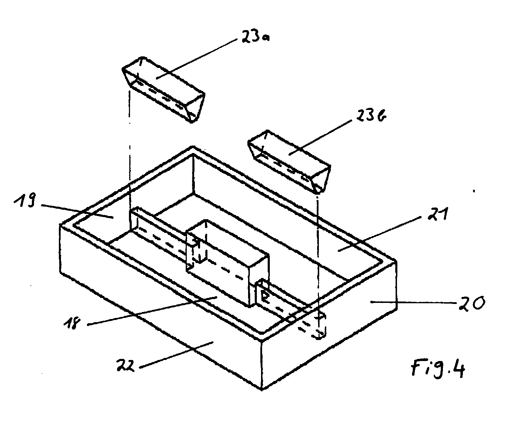

**Figur 4** zeigt die erfindungsgemäße Matrize zur Herstellung von zwei Verpackungsmulden, wobei das Mittelteil durch Stege unterbrochen ist. Auch diese Matrize verfügt über ein Unterteil 18, die Seitenteile 19, 20, die quer und die Seitenteile 21, 22, die parallel zur Transportrichtung der Verpackungsmulden ausgerichtet sind. Ferner weist diese Matrize ein Mittelteil auf, das aus den Teilen 23a und 23b und dem Steg 23c besteht. Während sich die Teile 23a und 23b nach unten verjüngen, weist der Steg 23c einen konstanten Querschnitt auf, so daß mit den Teilen 23a und 23b Hinterschnitte geformt werden, die durch einen Abschnitt ohne Hinterschnitt getrennt sind. Bei dieser Ausführungsform müssen lediglich die Teile 23a und 23b räumlich in ihrer Lage fixiert sein, während alle anderen Teile der Matrize vertikal absenkbar sind. Auch bei dieser Ausführungsform können die Seitenteile 21 und/oder 22 ebenfalls als Form für Hinterschnitte dienen.

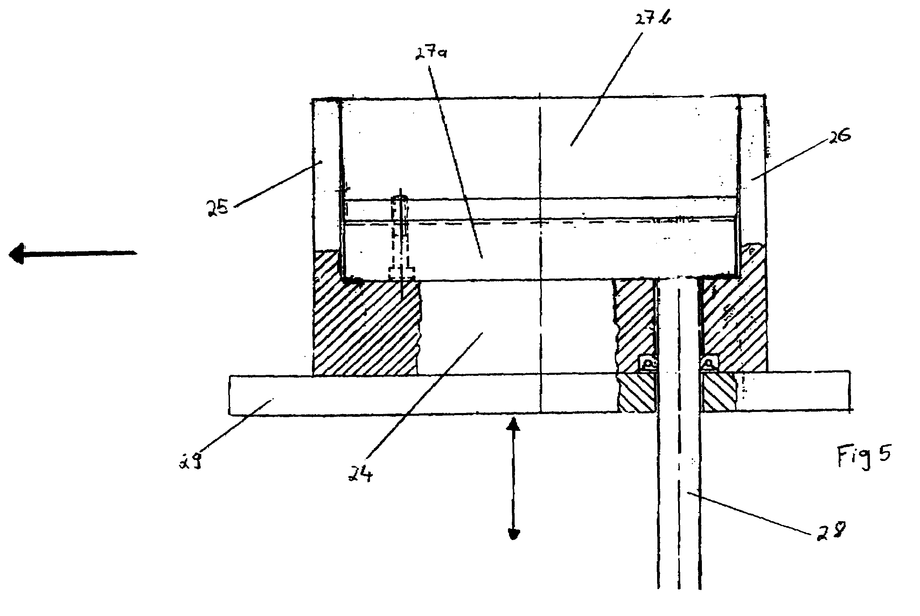

**Figur 5** zeigt die erfindungsgemäße Matrize für die Herstellung von zwei Verpackungsmulden mit dem dazugehörigen Absenkmechanismus. Von der Matrize sind das Unterteil 24 und die quer zur Transportrichtung der Verpackungsmulden stehenden Seitenteile 25 und 26 zu sehen. Ferner ist das Mittelteil der Matrize zu sehen, das aus zwei Teilen 27a und 27b besteht. Während das Teil 27a einen konstanten Querschnitt aufweist, verjüngt sich das Teil 27 b von oben nach unten, so daß mit dem Mittelteil Hinterschnitte in der Verpackungsmulden geformt werden können. Das Teil 27b ist auf das Teil 27a geschraubt, so daß die Form des Hinterschnittes ohne großen Montageaufwand verändert werden kann. Das Mittelteil ist an einer Stange 28 befestigt, die ihrerseits fest mit dem Maschinenrahmen (nicht dargestellt) verbunden ist, so daß das Mittelteil insgesamt in seiner räumlichen Lage gegenüber dem Maschinenrahmen fixiert ist. Das Unterteil der Matrize 24 ist auf einer Platte 29 montiert, die über einen Antrieb (nicht dargestellt) verfügt, mit dem sie, wie durch den Doppelpfeil angedeutet, vertikal hoch und runter bewegt wird. Die Platte 29 weist eine Bohrung auf, durch die die Stange 28 geführt wird.

Falls auch die parallel zur Transportrichtung stehenden Seitenteile zur Formung von Hinterschnitten dienen, werden diese ebenfalls mit Stangen in ihrer Lage gegenüber dem Maschinenrahmen fixiert. Der Fachmann erkennt, daß das Mittelteil auch auf jede andere Weise fixiert werden kann.

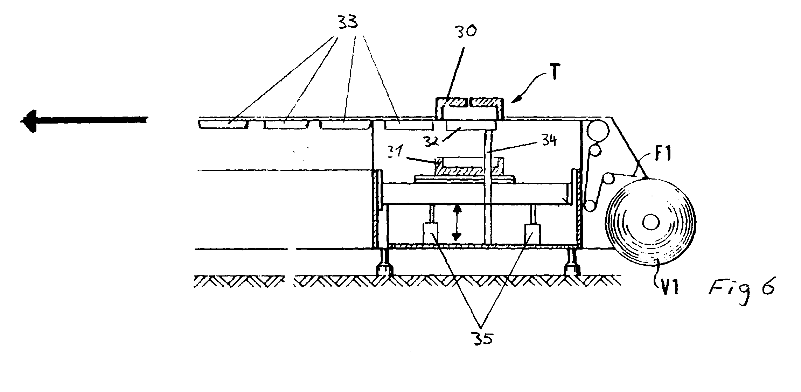

**Figur 6** zeigt eine Tiefziehstation mit der erfindungsgemäßen Matrize. Die Folie F1 wird von einer Rolle V1 abgerollt und z.B. mit einem Kettenantrieb zur Tiefziehstation T transportiert. Dort wird die Folie fixiert und mit Heizelementen 30 erwärmt, wobei das Erwärmen der Folie auch vor der Tiefziehstation erfolgen kann.

Zu dieser Zeit befindet sich die Matrize direkt unterhalb der Folie. Die Folie wird dann mit Druck oder mit Vakuum in die Matrize tiefgezogen und damit die Verpackungsmulde hergestellt. Nach dem Tiefziehen werden die vertikal verschiebbaren Teile der Matrize durch die Antriebe 35 abgesenkt und dabei die Verpackungsmulde aus der Matrize entformt. Das Mittelteil 32 wird mit einer Stange 34 in seiner Lage räumlich fixiert. Nach dem Absenken der vertikal verschiebbaren Teile der Matrize 31, wird die Folie und damit die gerade hergestellte Verpackungsmulde weitertransportiert und danach werden die vertikal verschiebbaren Teile der Matrize wieder nach oben bewegt und der Herstellungsvorgang der Verpackungsmulde kann erneut durchgeführt werden.

## Patentansprüche

1. Matrize (6) zur Herstellung einer Verpackungsmulde (1) mit mindestens einem Hinterschnitt (5), bestehend aus einem Unterteil (7), Seitenteilen (8, 9), die quer und Seitenteilen (10, 11), die parallel zur Transportrichtung der Verpackungsmulden ausgerichtet sind, dadurch gekennzeichnet, daß mindestens ein parallel zur Transportrichtung ausgerichtetes Seitenteil (11) als Form für den Hinterschnitt (1) dient und daß dieses Seitenteil (11) in seiner räumlichen Lage gegenüber dem Maschinenrahmen fixiert ist, während die anderen Teile (7, 8, 9, 10) der Matrize vertikal nach unten verschiebbar sind.

2. Matrize nach Anspruch 1, dadurch gekennzeichnet, daß beide parallel zur Transportrichtung der Verpackungsmulden ausgerichteten Seitenteile (10, 11) als Form für zwei Hinterschnitte dienen, so daß die Verpackungsmulde an zwei gegenüberliegenden Seiten Hinterschnitte aufweist.

3. Matrize nach einem der Ansprüche 1-2, dadurch gekennzeichnet, daß das/die Seitenteil(e) (10, 11), die als Form für den Hinterschnitt dienen, durch mindestens einen Steg mit einem konstanten Querschnitt unterbrochen ist/sind.

4. Matrize nach einem der Ansprüche 1-3 dadurch gekennzeichnet, daß das/die Seitenteil(e) (10, 11), auf seiner/ihrer Oberseite eine reibungsarme Oberfläche aufweist(aufweisen).

5. Matrize nach einem der Ansprüche 1-4, dadurch gekennzeichnet, daß das/die Seitenteil(e) (10, 11) gegenüber den anderen Teilen der Matrize abgedichtet ist/sind.

6. Matrize zur Herstellung mehrerer Verpackungsmulden mit mindestens einem Hinterschnitt, bestehend aus einem Unterteil (12), Seitenteilen (13, 14), die quer und Seitenteilen (15, 16), die parallel zur Transportrichtung der Verpackungsmulden ausgerichtet sind, dadurch gekennzeichnet, daß sie zusätzlich mindestens ein Mittelteil (17) aufweist, das sich vorzugsweise auf beiden Seiten vom oberen Ende der Matrize in Richtung zur Unterseite hin verjüngt und das gegenüber dem Maschinenrahmen in seiner räumlichen Lage fixiert ist, während die anderen Teile (12, 13, 14, 15, 16) der Matrize vertikal nach unten verschiebbar sind.

7. Matrize nach Anspruch 6, dadurch gekennzeichnet, daß auch das Seitenteil (15) und/oder das Seitenteil (16) als Form für einen Hinterschnitt dienen und ebenfalls in ihrer räumlichen Lage gegenüber dem Maschinenrahmen fixiert sind.

8. Matrize gemäß Anspruch 6 oder 7, dadurch gekennzeichnet, daß das/die Mittelteil(e) durch mindestens einen Steg mit einem konstanten Querschnitt unterbrochen ist/sind.

9. Matrize gemäß einem der Ansprüche 6-8, dadurch gekennzeichnet, daß das Mittelteil (17) und gegebenenfalls die Seitenteile (15, 16) eine reibungsarme Oberfläche aufweisen.

10. Matrize gemäß einem der Ansprüche 6-9, dadurch gekennzeichnet, daß das Mittelteil (17) und gegebenenfalls die Seitenteile (15, 16) gegenüber den anderen Teilen der Matrize abgedichtet sind.

11. Verfahren zur Herstellung einer Verpackungsmulde mit mindestens einem Hinterschnitt unter Verwendung der Matrize gemäß einem der Ansprüche 1-10, dadurch gekennzeichnet, daß:
- die Folie, aus der die Verpackungsmulde hergestellt wird, über die Matrize transportiert, gegebenenfalls erwärmt und in die Matrize geformt wird,
- die vertikal verschiebbaren Teile der Matrize vertikal abgesenkt werden und
- die fertiggestellte Verpackungsmulde weitertransportiert wird.

12. Verfahren nach Anspruch 11, dadurch gekennzeichnet, daß die Folie mit einem Stempel vorgeformt und anschließend mit Druck und/oder Vakuum fertiggeformt wird.

13. Verfahren nach Anspruch 11, dadurch gekennzeichnet, daß die Folie mit Druck oder mit Vakuum oder mit Druck und Vakuum in die Matrize geformt wird.
